# EUROPÄISCHE PATENTSCHRIFT

(11) **EP 1 575 742 B1**
(45) Veröffentlichungstag und Bekanntmachung des Hinweises auf die Patenterteilung: **28.03.2007**
(21) Anmeldenummer: 03813519.0
(22) Anmeldetag: 21.07.2003
(51) Int. Cl.: B25F 5/00, F16H 55/14, F16F 15/124

(54) **GETRIEBE, INSBESONDERE FÜR ELEKTROHANDWERKZEUGMASCHINEN**
GEARSET, IN PARTICULAR FOR ELECTRIC HAND MACHINE TOOLS
TRANSMISSION, EN PARTICULIER POUR MACHINES-OUTILS ELECTRIQUES

(30) Priorität: 19.12.2002 DE 10259519
(43) Veröffentlichungstag der Anmeldung: 21.09.2005
(73) Patentinhaber: ROBERT BOSCH GMBH, 70442 Stuttgart (DE)
(72) Erfinder: SCHADOW, Joachim, 72135 Dettenhausen (DE); WIKER, Juergen, 70771 Leinfelden-Echterdingen (DE); STIERLE, Peter, 71111 Waldenbuch (DE)
(86) Internationale Anmeldenummer: PCT/DE2003/002427
(87) Internationale Veröffentlichungsnummer: WO 2004/056535

(56) Entgegenhaltungen:
- WO-A-96/41087
- DE-A- 3 922 552

## Beschreibung

### Stand der Technik

Die Erfindung geht aus von einem Getriebe, insbesondere für Elektrohandwerkzeugmaschinen, nach dem Oberbegriff des Patentanspruchs 1.

Bei Getrieben für Elektrohandwerkzeugmaschinen kommen aus Kostengründen gesinterte Zahnräder mit einer Spiral- oder Geradverzahnung zum Einsatz. Auf geschnittene Zahnräder, deren Fertigungskosten relativ hoch sind, wird nur dann zurückgegriffen, wenn bei hochwertigen Geräten hohe Anforderungen an die Laufruhe gestellt werden. Zahnräder aus Kunststoff, die ähnlich kostengünstig wie Sinter-Zahnräder herstellbar sind, können nur kleine Drehmomente übertragen und finden daher bei Elektrohandwerkzeugmaschinen nur in wenigen Ausnahmefällen Anwendung.

Aus Sinter-Zahnrädern zusammengestellte Zahnradpaare haben fertigungsbedingt den Nachteil großer Toleranzen, was ein lautes Laufgeräusch verursacht und sich negativ auf die Lebensdauer auswirkt.

Es ist ein Getriebe der eingangs genannten Art für einen Winkelschleifer bekannt (DE 39 22 552 A), mit einem auf einer Antriebswelle drehfest sitzenden Antriebs-Ritzel und einem mit diesem Ritzel kämmenden und davon angetriebenen Kegelzahnrad für den Antrieb einer Abtriebswelle. Das Kegelzahnrad ist in zwei axiale Hälften geteilt. Die untere Kegelzahnradhälfte ist drehfest mit der Abtriebswelle verbunden. Die obere Kegelzahnradhälfte hat keinen unmittelbaren Kontakt mit der Abtriebswelle. Zwischen beiden Kegelzahnradhälften ist axial ein flächiges schwingungsdämpfendes Bauteil eingefügt, das aus schwingungsdämpfenden Material wie Gummi von geeigneter Härte od. dgl. besteht. Die auf der Abtriebswelle angebrachte Kegelzahnradhälfte ist mit der anderen, antriebsseiten Kegelzahnradhälfte, die mit dem Ritzel kämmt, über das schwingungsdämpfende Bauteil in der Gestaltung als Kupplungsteil mechanisch verbunden.

Dieses Kupplungsteil ist flanschhülsenartig ausgebildet und weist im Bereich seiner Hülse an seinem Innen- und Außenumfang Längsnuten auf, mit denen Zähne, die an beiden Kegelzahnradhälften vorgesehen sind, zusammenwirken. Das Kupplungsteil ist mit Ausnehmungen versehen, in die an den beiden axial einander gegenüberliegenden Flächen der beiden Kegelzahnradhälften befindliche Nocken eingreifen. Durch dieses Bauteil in Form des aus schwingungsdämpfendem Material bestehenden Kupplungsteils werden während des Bearbeitungsvorganges von der Schleifscheibe auf die Abtriebswelle übertragene Vibrationen weitgehend abgedämpft, so dass auf das mit der oberen Kegelzahnradhälfte kämmende Ritzel allenfalls nur noch in sehr geringem Ausmaß von der Bearbeitungsseite herrührende Schwingungen übertragen werden. Entsprechendes soll auch für eine Schwingungsübertragung über die Lagerung der Abtriebswelle auf das Maschinengehäuse gelten. Das Kupplungsteil ist mit beiden Kegelradhälften durch einen Vulkanisationsprozess mechanisch verbunden.

### Vorteile der Erfindung

Das erfindungsgemäße Getriebe, insbesondere für Elektrohandwerkzeugmaschinen, mit den Merkmalen des Anspruchs 1 hat den Vorteil, daß durch die zwischen dem Abtriebs-Zahnrad und der Abtriebswelle eingeschalteten Dämpfungselemente, die vorzugsweise aus Gummi oder einem gummiähnlichen Material mit hohem Dämpfungsfaktor hergestellt sind und in Umfangsrichtung bzw. Tangentialrichtung wirken, nicht nur in der Zahnradpaarung vorhandene Toleranzen, insbesondere Teilungsfehler, Profilabweichungen und Rundlauffehler, kompensiert werden, wodurch Getriebegeräusche und vom Getriebe verursachte Vibrationen deutlich sinken, sondern dass auch die auf die Verzahnung wirkenden, sehr hohen Anlaufkräfte, die beim Einschalten des die Antriebswelle drehenden Antriebsmotors durch die Trägheit des Antriebs und der angetriebenen Massen auftreten, sowie die im Betrieb an der Verzahnung auftretenden Lastspitzen reduziert werden.

Insgesamt führt dies zu einer großen Laufruhe bei Sinter- Zahnrädern und unabhängig von dem Typ der Zahnräder (gesintert oder geschnitten) infolge der verringerten mechanischen Belastung zu einer hohen Lebensdauer des Getriebes. Die Dämpfungselemente können dabei in die Taschen eingelegt oder mit den Radialstegen verbunden, z.B. auf die Radialstege aufgespritzt, werden.

Durch die in den weiteren Ansprüchen aufgeführten Maßnahmen sind vorteilhafte Weiterbildungen und Verbesserungen des im Anspruch 1 angegeben Getriebes möglich.

### Zeichnung

Die Erfindung ist anhand eines in der Zeichnung dargestellten Ausführungsbeispiels in der nachfolgenden Beschreibung näher erläutert. Es zeigen:
- Fig. 1: ein Winkelgetriebe für eine Elektrohandwerkzeugmaschine in Explosionsdarstellung,
- Fig. 2: eine perspektivische Ansicht des zusammengesetzten Getriebes in Fig. 1,
- Fig. 3: eine Matrix zur übersichtlichen Zusammenstellung möglicher Taschen- und Radialsteggeometrien im Getriebe gemäß Fig. 1 und 2.

### Beschreibung des Ausfiihrungsbeispiels

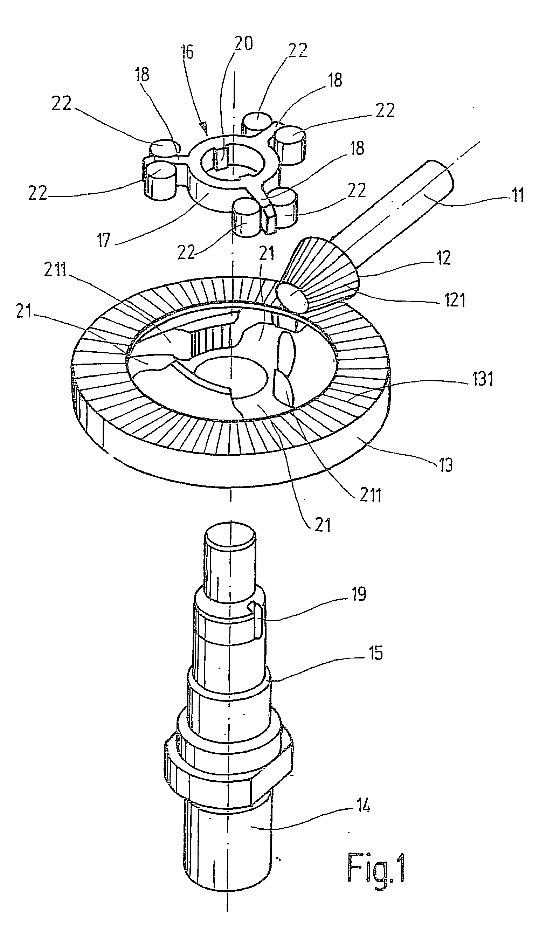

Das in Fig. 1 in Explosionsdarstellung skizzierte Winkelgetriebe für eine Elektrohandwerkzeugmaschine als Ausführungsbeispiel für ein allgemeines Getriebe weist eine von einem Elektromotor antreibbare Antriebswelle 11, ein auf der Antriebswelle 11 drehfest sitzendes Antriebs-Zahnrad 12, das hier als Kegelritzel mit Ritzelverzahnung 121 ausgeführt ist, ein mit dem Antriebs-Zahnrad 12 kämmendes Abtriebs-Zahnrad 13, das als Tellerrad mit Stirnverzahnung 131 ausgebildet ist, sowie eine vom Abtriebs-Zahnrad 13 angetriebene Abtriebswelle 14 auf. Das Abtriebs-Zahnrad 13 sitzt spielfrei drehbar und axial unverschieblich auf der Abtriebswelle 14, wobei es sich in axialer Richtung einerseits an einer auf der Abtriebswelle 14 ausgebildeten Ringschulter 15 (Fig. 1) und andererseits an einem Mitnehmer 16 abstützt, der auf die Abtriebswelle 14 aufgepreßt ist und zusätzlich formschlüssig mit der Abtriebswelle 14 verbunden ist. Der Mitnehmer 16 weist einen die Abtriebswelle 14 umschließenden Ring 17 sowie eine Mehrzahl, im Ausführungsbeispiel drei, in Umfangsrichtung versetzt angeordnete Radialstege 18 auf, die mit dem Ring 17 einstückig ausgebildet sind oder statt dessen mehrteilig sind. Die Abtriebswelle 14 trägt im Bereich des Rings 17 zwei diametral angeordnete Axialnuten 19 und der Ring 17 zwei diametral angeordnete, an der inneren Ringfläche vorstehende Nocken 20, die formschlüssig in die Axialnuten 19 eintauchen. Die Radialstege 18 sind im Ausführungsbeispiel um gleiche Umfangswinkel versetzt und ragen jeweils mittig in Taschen 21 hinein, die im Abtriebs-Zahnrad 13 in gleichem Drehwinkel-Abstand wie die Radialstege 18 voneinander eingeformt sind. Die Taschen 21 sind in Umfangsrichtung jeweils durch radial ausgerichtete Seitenwände 211 begrenzt. In jeder Tasche 21 sind zwei Dämpfungselemente 22 aus federelastischem Material, z.B. Gummi, angeordnet, wobei jedes Dämpfungselement 22 einerseits an einem Radialsteg 18 und andererseits an einer Seitenwand 211 der Tasche 21 anliegt. Die Dämpfungselemente 22 werden entweder bei der Montage des Getriebes in die Taschen 21 eingelegt oder zuvor mit den Radialstegen 18 fest verbunden.

Bei Einschalten des Elektromotors wird das Drehmoment von der Antriebswelle 11 über das Antriebs-Zahnrad 12 auf das Abtriebs-Zahnrad 13 übertragen. Da das Abtriebs-Zahnrad 13 drehbar auf der Abtriebswelle 14 sitzt, kann sich das Abtriebs-Zahnrad 13 zunächst unter Zusammendrücken des in Drehrichtung hinten liegenden Dämpfungselements 22 um einige Grad verdrehen, um dann über die Radialstege 18 den Mitnehmer 16 zu verdrehen und - da der Mitnehmer 16 drehfest auf der Abtriebswelle 14 sitzt - die Abtriebswelle 14 anzutreiben. Durch die Dämpfungselemente 22 wird also erreicht, daß im Abtriebs-Zahnrad 13 bereits eine Verdrehung stattfindet, ohne daß an der Abtriebswelle 14 eine Verdrehung auftritt. Durch diese Verzögerung wird die maximal auftretende Beschleunigung reduziert und die Zeit bis zum Erreichen der vollen Leerlaufdrehzahl der Abtriebswelle 14 verlängert. Damit wird die hohe Belastung auf die Verzahnung zwischen Antriebs-Zahnrad 12 und Abtriebs-Zahnrad 13 beim Anlauf reduziert.

Im Betrieb der Elektrohandwerkzeugmaschine wird durch die Dämpfungselemente 22 das Aufeinanderschlagen der Zähne zwischen der Ritzelverzahnung 121 und Stirnverzahnung 131 abgedämpft, was zu einer deutlichen Reduzierung des Getrieberasseln führt, das bei herkömmlichen Elektrohandwerkzeugmaschinen insbesondere im An- oder Auslauf der Elektrohandwerkzeugmaschine deutlich zu vernehmen ist. Hierfür sind insbesondere die in Drehrichtung vorderen Dämpfungselemente 22 ausschlaggebend, die die der Drehrichtung entgegengesetzt auftretenden Stöße dämpfen.

Beim Arbeiten mit der Elektrohandwerkzeugmaschine kommt es vor, daß das Werkzeug kurzzeitig im Werkstück einhakt. Z.B. beim Arbeiten mit Winkelschleifern und Trennscheiben ist dies ein häufig auftretender Arbeitsfall. Bei diesem Einhaken, was einem kurzzeitigen Blockieren des Werkzeugs gleichkommt, werden extreme Kräfte auf die Verzahnungen 121, 131 zwischen Antriebs-Zahnrad 12 und Abtriebs-Zahnrad 13 ausgeübt. Diese Kraftspitzen werden durch die Dämpfungselemente 22 wirksam abgeschwächt, was zu einer Reduzierung des Rückschlagmoments, das der Bediener aufnehmen muß, führt und somit für den Bediener einen Komfortgewinn darstellt. Insgesamt werden die mechanischen Belastungen auf das Getriebe reduziert, was zu höheren Standzeiten und spürbar höherem Komfort führt, da Getriebeschwingungen, Getriebestöße u. ä. nur stark vermindert auf das Maschinengehäuse übertragen werden.

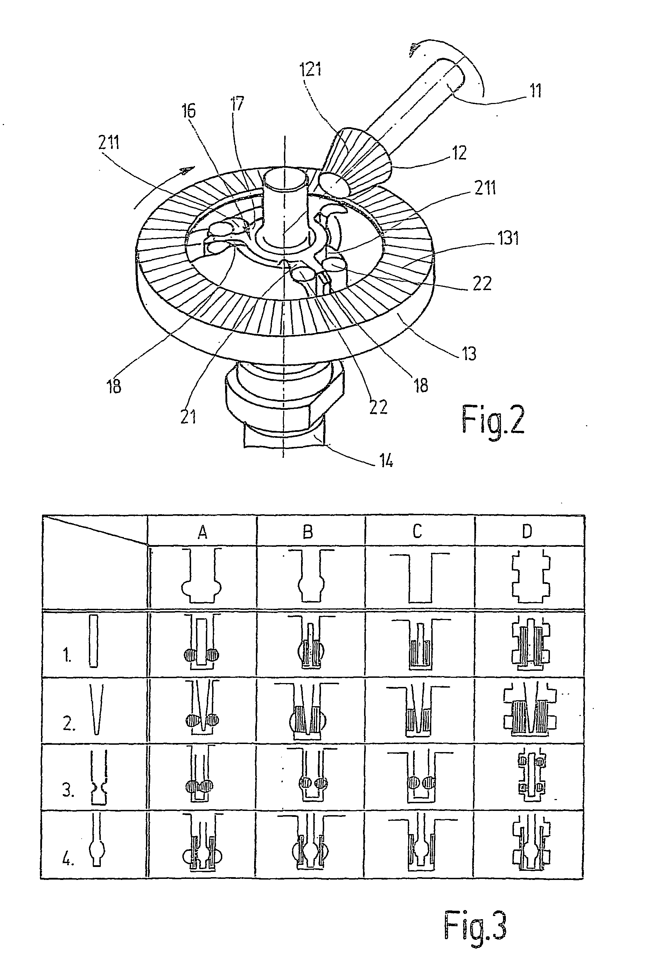

In dem in Fig. 1 und 2 dargestellten Ausführungsbeispiel sind die Taschen 21 mit rechteckförmigem lichten Querschnitt ausgeführt, die in Umfangsrichtung von zwei radialen, ebenen Seitenwänden 211 begrenzt sind. Die in die Taschen 21 hineinragenden Radialstege 18 haben einen rechteckförmigen Querschnitt. Die Dämpfungselemente 22 können eine beliebige Geometrie aufweisen. Sie sind beim Ausführungsbeispiel z.B. als walzenförmige, elastische Körper ausgebildet, die parallel zur Achse der Abtriebswelle 14 ausgerichtet sind. Selbstverständlich sind modifizierte Geometrien der Taschen 21 und der Radialstege 18 möglich, wobei auch die Anzahl der Radialstege 18 und entsprechend die Anzahl der Taschen 21 variiert werden kann.

In Fig. 3 ist eine Matrix dargestellt, die mögliche Kombinationen von Taschengeometrien und Radialsteggeometrien zeigt. ln der obersten Zeile sind verschiedene lichte Profile der Taschen 21 und in der linken Spalte verschiedene Profile der Radialstege 18 angegeben. Dabei können alle Taschenprofile A, B, C und D mit den entsprechenden Radialstegprofilen in den Zeilen 1, 2, 3 und 4 kombiniert werden. Die Matrix ist selbsterklärend, so daß lediglich auf ein paar Besonderheiten hingewiesen wird:

In Spalte C weist die Tasche 21, wie in dem Ausführungsbeispiel der Fig. 1 und 2, ebene Seitenwände auf. ln den Spalten A, B und D sind die Seitenwände mit Ausbuchtungen versehen, die entweder bogenförmig oder eckig ausgeführt sein können. Diese Ausbuchtungen nehmen bei der Deformation der Dämpfungselemente 22 ein Teil des Materials der Dämpfungselemente 22 auf, so daß die Federeigenschaften der Dämpfungselemente 22 verbessert werden. Die Profile der Radialstege 18 können, wie in der linken Spalie-dargestellt, rechteckig, keilförmig, und rechteckig mit Einbuchtungen (Zeile 3) und Ausbuchtungen (Zeile 4) ausgeführt werden. In allen Kombinationsfällen von Taschenprofil und Radialstegprofil stützen sich die Dämpfungselemente 22 nach wie vor am Radialsteg 18 und an den beiden Seitenwänden 211 der Taschen 21 ab. In den Kombinationen A/1. A/2, A/3, B/3, C/3 und D/3 sind die Dämpfungselemente 22 entweder kugelförmig oder walzenförmig ausgebildet, wobei sie sich bei Walzenform in Radialrichtung erstrecken.

## Patentansprüche

1. Getriebe, insbesondere für Elektrohandwerkzeugmaschinen, mit einem auf einer Antriebswelle (11) drehfest sitzenden Antriebs-Zahnrad (12), einem mit diesem kämmenden, eine Abtriebswelle (14) antreibenden Abtriebs-Zahnrad (13) und zwischen dem Abtriebs-Zahnrad (13) und der Abtriebswelle (14) angeordneten federelastischen Dämpfungselementen (22), die an einem drehfest und axial unverschieblich mit der Abtriebswelle (14) verbundenen Mitnehmer (16) gehalten sind, wobei das Abtriebs-Zahnrad (13) relativ zu der Abtriebswelle (14) drehbar ist und durch radiale Seitenwände (211) begrenzte, in Umfangsrichtung zueinander versetzt angeordnete Taschen (21) aufweist, in denen die Dämpfungselemente (22) mit Anlage an den radialen Seitenwänden (211) einliegen, **dadurch gekennzeichnet, daß** der Mitnehmer (16) einen auf der Abtriebswelle (14) sitzenden Ring (17) und eine der Zahl der Taschen (21) im Abtriebs-Zahnrad (13) entsprechende Anzahl von Radialstegen (18) aufweist, von denen jeweils einer in eine Tasche (21) hineinragt, und daß in jeder Tasche (21) zwei oder mehr auf jeder Seite des Radialstegs (18) einliegende Dämpfungselemente (22) vorgesehen sind, von denen sich jedes an dem Radialsteg (18) und an einer radialen Seitenwand (211) der Tasche (21) abstützt.

2. Getriebe nach Anspruch 1, **dadurch gekennzeichnet, daß** das Abtriebs-Zahnrad (13) sich in Achsrichtung einerseits an einer an der Abtriebswelle (14) ausgebildeten Ringschulter (15) und andererseits an dem Mitnehmer (16) abstützt.

3. Getriebe nach Anspruch 1, **dadurch gekennzeichnet, daß** der Ring (17) des Mitnehmers (16) auf die Abtriebswelle (14) aufgepreßt ist.

4. Getriebe nach einem der Ansprüche 1 bis 3, **dadurch gekennzeichnet, daß** der Ring (17) des Mitnehmers (16) formschlüssig mit der Abtriebswelle (14) verbunden ist.

5. Getriebe nach einem der Ansprüche 1 bis 4, **dadurch gekennzeichnet, daß** die radialen Seitenwände (211) der Taschen (21) im Bereich der Anlage der Dämpfungselemente (22) Vertiefungen aufweisen.

6. Getriebe nach einem der Ansprüche 1 bis 5, **dadurch gekennzeichnet, daß** die Radialstege (18) des Mitnehmers (16) zumindest in ihrem in die Taschen (21) hineinragenden Bereich ein rechteckiges Profil mit oder ohne Einbuchtungen oder Ausbeulungen oder ein keilförmiges Profil aufweisen.

7. Getriebe nach einem der Ansprüche 1 bis 6, **gekennzeichnet durch** seine Ausbildung als Winkelgetriebe, bei dem das Abtriebs-Zahnrad (13) als Tellerrad mit Stirnverzahnung (131) und das Antriebs-Zahnrad (12) als Kegelritzel mit Ritzelverzahnung (121) ausgebildet ist.

## Claims

1. Gearing, in particular for portable electric power tools, comprising a drive gearwheel (12) sitting on a drive shaft (11) in a rotationally fixed manner, an output gearwheel (13) meshing with said drive gearwheel (12) and driving an output shaft (14), and elastic damping elements (22) which are arranged between the output gearwheel (13) and the output shaft (14) and are held on a driver (16) connected to the output shaft (14) in a rotationally and axially fixed manner, the output gearwheel (13) being rotatable relative to the output shaft (14) and having pockets (21) which are defined by radial side walls (211) and are arranged so as to be offset from one another in the circumferential direction and in which the damping elements (22) rest in contact with the radial side walls (211), **characterized in that** the driver (16) has a ring (17) sitting on the output shaft (14) and a number of radial webs (18) which correspond to the number of pockets (21) in the output gearwheel (13) and of which one each projects into a respective pocket (21), and **in that** two or more damping elements (22) resting in place on each side of the radial web (18) are provided in each pocket (21), of which damping elements (22) each is supported on the radial web (18) and on a radial side wall (211) of the pocket (21).

2. Gearing according to Claim 1, **characterized in that** the output gearwheel (13) is supported in the axial direction on the one hand on an annular shoulder (15) formed on the output shaft (14) and on the other hand on the driver (16).

3. Gearing according to Claim 1, **characterized in that** the ring (17) of the driver (16) is pressed onto the output shaft (14).

4. Gearing according to one of Claims 1 to 3, **characterized in that** the ring (17) of the driver (16) is connected to the output shaft (14) in a positive-locking manner.

5. Gearing according to one of Claims 1 to 4, **characterized in that** the radial side walls (211) of the pockets (21) have recesses in the region in contact with the damping elements (22).

6. Gearing according to one of Claims 1 to 5, **characterized in that** the radial webs (18) of the driver (16), at least in their region projecting into the pockets (21), have a rectangular profile, with or without niches or bulges, or a wedge-shaped profile.

7. Gearing according to one of Claims 1 to 6, **characterized by** its design as angular gearing, in which the output gearwheel (13) is designed as a crown wheel having a spur tooth system (131) and the drive gearwheel (12) is designed as a bevel pinion having a pinion tooth system (121).

## Revendications

1. Transmission, notamment pour des outils à main électromotorisés, comportant un pignon d'entraînement (12) solidaire d'un arbre d'entraînement (11), un pignon de sortie (13) entraînant un arbre de sortie (14), avec entre ce pignon (13) et cet arbre (14), des éléments amortisseurs (22) élastiques qui sont maintenus sur un entraîneur (16) relié avec solidarité en rotation et sans pouvoir coulisser axialement, à l'arbre de sortie (14), le pignon de sortie (13) pouvant tourner par rapport à l'arbre de sortie (14) en présentant des poches (21) délimitées par des parois latérales radiales (211) et décalées les unes par rapport aux autres dans la direction périphérique, les éléments d'amortissement (22) étant logés dans ces poches avec appui sur les parois latérales radiales (211),
**caractérisée en ce que**
l'entraîneur (16) présente une bague (17) montée sur l'arbre de sortie (14) et des barrettes radiales (18) en nombre correspondant à celui des poches (21) existant sur le pignon de sortie (13), chaque barrette (18) pénétrant dans une poche (21) qui contient au moins deux éléments amortisseurs (22) disposés de chaque côté de la barrette radiale (18), chaque élément d'amortissement s'appuyant sur la barrette radiale (18) et sur une paroi latérale radiale (211) de la poche (21).

2. Transmission selon la revendication 1,
**caractérisée en ce que**
le pignon de sortie (13) s'appuie en direction axiale d'un côté sur un épaulement annulaire (15) formé sur l'arbre de sortie (14) et de l'autre côté sur l'entraîneur (16).

3. Transmission selon la revendication 1,
**caractérisée en ce que**
la bague (17) de l'entraîneur (16) est monté à la presse sur l'arbre de sortie (14).

4. Transmission selon une des revendications 1 à 3,
**caractérisée en ce que**
la bague (17) de l'entraîneur (16) est reliée à l'arbre de sortie (14) avec verrouillage par combinaison de formes.

5. Transmission selon une des revendications 1 à 4,
**caractérisée en ce que**
les parois latérales radiales (211) des poches (21) présentent des cavités dans la zone d'appui des éléments amortisseurs (22).

6. Transmission selon une des revendications 1 à 5,
**caractérisée en ce que**
les barrettes radiales (18) de l'entraîneur (16) présentent au moins dans leur zone pénétrant dans les poches (21), un profil rectangulaire avec ou sans rainure ou bossage, ou un profil en forme de coin.

7. Transmission selon une des revendications 1 à 6,
**caractérisée en ce qu'**
elle est constituée en tant que transmission conique dans laquelle le pignon de sortie (13) est une couronne de différentiel avec une denture frontale (131), tandis que le pignon d'entraînement (12) est un pignon d'attaque à denture conique (121).
